# FASCICULE DE BREVET EUROPEEN

(11) **EP 3 802 153 B1**
(45) Date de publication et mention de la délivrance du brevet: **30.07.2025**
(21) Numéro de dépôt: 19736423.5
(22) Date de dépôt: 28.05.2019
(51) Int. Cl.: B60C 11/03, B60C 11/11

(54) **BANDE DE ROULEMENT POUR VÉHICULE AGRICOLE**
LAUFFLÄCHE FÜR EIN LANDWIRTSCHAFTLICHES FAHRZEUG
TREAD FOR AN AGRICULTURAL VEHICLE

(30) Priorité: 28.05.2018 FR 1854503
(43) Date de publication de la demande: 14.04.2021
(73) Titulaire: COMPAGNIE GENERALE DES ETABLISSEMENTS MICHELIN, 63000 Clermont-Ferrand (FR)
(72) Inventeur: PERRIN, Frédéric, 63040 CLERMONT-FERRAND Cedex 9 (FR); DEAN, David, 63040 CLERMONT-FERRAND Cedex 9 (FR); PRAS, Maxime, 63040 CLERMONT-FERRAND Cedex 9 (FR); VACHERAND, Jean-Michel, 63040 CLERMONT-FERRAND Cedex 9 (FR)
(74) Mandataire: M.F.P. Michelin
(86) Numéro de dépôt international: PCT/FR2019/051248
(87) Numéro de publication internationale: WO 2019/229370

(56) Documents cités:
- DE-B- 1 098 386
- JP-A- H02 293 205
- JP-A- S63 106 115
- US-A1- 2018 009 268

## Description

### DOMAINE DE L'INVENTION

La présente invention concerne une bande de roulement destinée à équiper un véhicule agricole et plus particulièrement une bande de roulement dont la performance en traction en terrain meuble est améliorée.

De telles bandes de roulement sont par exemple décrites dans US 2018/009268 A1, JP S63 106115 A, DE 10 98 386 B, JP H02 293205 A.

L'invention sera plus particulièrement décrite en référence à un véhicule agricole polyvalent c'est à dire un véhicule pouvant rouler aussi bien dans les champs en terrain meuble que sur route, tel qu'un tracteur agricole.

Une bande de roulement pour véhicule agricole peut par exemple être attachée à la périphérie d'un pneumatique, d'un bandage plein ou d'une roue élastique non-pneumatique. Une telle bande de roulement est destinée à rouler sur divers types de sols tels que la terre plus ou moins compacte des champs, les chemins non goudronnés d'accès aux champs et les surfaces goudronnées des routes. Compte tenu de la diversité de l'usage, en champ et sur route, la bande de roulement d'un tracteur agricole doit présenter un compromis de performances entre la traction en champ, la résistance aux arrachements, la résistance à l'usure sur route, la résistance au roulement, le confort vibratoire sur route.

### DEFINITIONS

Par direction radiale, on entend dans le présent document toute direction qui est perpendiculaire à l'axe de rotation de la roue. Cette direction correspond à la direction de l'épaisseur de la bande de roulement et est généralement référencée « **Z** ».

Par direction transversale ou axiale, on entend une direction parallèle à l'axe de rotation de la roue. Cette direction est généralement référencée **«Y ».**

Par direction circonférentielle, on entend une direction qui est tangente à tout cercle centré sur l'axe de rotation de la roue. Cette direction est perpendiculaire à la fois à la direction axiale et à toute direction radiale. Cette direction est généralement référencée **« X ».**

Un pneu comprend, de façon générale, un sommet comprenant radialement à l'extérieur une bande de roulement destinée à venir en contact avec le sol par l'intermédiaire d'une surface de roulement, deux bourrelets destinés à venir en contact avec une jante sur laquelle est monté le pneu et deux flancs reliant le sommet aux bourrelets. Un pneu pour tracteur agricole comprend une armature de carcasse, ancrée dans chaque bourrelet, usuellement composée d'au moins une couche d'éléments de renforcement textiles.

L'armature de carcasse est de façon usuelle surmontée radialement à l'extérieur par une armature de sommet composée d'une pluralité de couches de travail, chaque couche de travail étant constituée d'éléments de renforcement textiles ou métalliques enrobés dans un matériau élastomérique. Les éléments de renforcement sont en général croisés d'une couche à la suivante.

La bande de roulement, qui est la partie du pneu destinée à venir en contact avec le sol en roulage, comprend une surface portante parallèle ou substantiellement parallèle à l'armature de sommet du pneu. Sur la surface portante de la bande de roulement et venant de matière sont moulées des éléments de sculptures.

Une bande de roulement peut également être associée non pas à un pneumatique destiné à être monté sur une jante rigide mais associée à une roue élastique non-pneumatique c'est à dire structurellement déformable et dépourvue d'enceinte contenant de l'air sous pression.

### ÉTAT DE LA TECHNIQUE

Les bandes de roulement des engins agricoles comportent conventionnellement des barrettes s'étendant du centre de la bande de roulement vers les épaules. Ces barrettes sont disposées de chaque côté du plan médian équatorial du pneu de manière à former un motif en V, la pointe du motif en V (ou encore motif en chevron) étant destinée à entrer la première dans l'aire de contact avec le sol. Les barrettes sont espacées entre elles pour former des sillons ou rainures ; la largeur de ces sillons est déterminée de façon à permettre un bon fonctionnement à la fois sur route et sur terrain meuble. Les barrettes présentent une symétrie par rapport au plan médian équatorial du pneumatique, avec le plus souvent un décalage circonférentiel entre les deux rangées de barrettes, similaire à celui obtenu par une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable. Les barrettes ont une face de contact destinée à rouler sur un sol rigide comme par exemple les routes empruntées pour se rendre à proximité des champs et une face d'attaque destinée à transmettre la force motrice lorsque l'engin agricole se déplace sur un terrain meuble, typiquement la terre des champs. Pour ce faire, la face d'attaque des barrettes est généralement parallèle à une direction radiale.

Une insatisfaction récurrente concerne les performances de traction sur sol meuble des bandes de roulement connues. La productivité des engins agricoles est directement liée à leur capacité de traction sur sol meuble. Améliorer cette performance permettrait à l'utilisateur d'améliorer non seulement le rendement de son matériel mais aussi de diminuer ses coûts d'exploitation, par exemple en réduisant la consommation de carburant par unité de surface exploitée. Naturellement, l'amélioration de la traction ne doit pas se faire au détriment d'autres performances comme par exemple la résistance à l'usure, le confort et la possibilité de rouler à vitesse suffisamment élevée sur route.

### BREF EXPOSE DE L'INVENTION

Cet objectif a été atteint selon l'invention par une bande de roulement pour un essieu moteur d'un engin agricole, ladite bande de roulement comprenant des éléments de sculpture s'étendant radialement vers l'extérieur à partir d'une surface portante, lesdits éléments de sculpture comprenant un nombre total **N** de blocs de sculpture séparés entre eux axialement, lesdits blocs de sculpture comprenant une face de contact, une face d'attaque et une face de fuite, ladite face d'attaque étant inclinée d'un angle **α** vers l'arrière par rapport à la direction radiale selon le sens de roulement de la bande de roulement, ladite bande de roulement comprenant un nombre **n** de blocs de sculpture pour lesquels l'angle **α** est compris entre 50 degrés et 75 degrés, le nombre **n** étant au moins égal à 0,2 x **N.**

De préférence, l'angle **α** est compris entre 60 degrés et 70 degrés.

De préférence encore, le nombre **n** est au moins égal à 0,4 x **N.**

De préférence encore, la face d'attaque est principalement composée de deux surfaces, une première surface étant adjacente à la face de contact et une deuxième surface étant adjacente à la surface portante, l'angle d'inclinaison **α** étant celui de la droite de régression linéaire du profil de la face d'attaque, la première surface formant un angle **α1** avec la direction radiale Z, **α1** étant supérieur à **α** et compris entre 50° et 75°, une hauteur radiale **h** de la première surface étant au moins égale à un tiers de la hauteur **H** du bloc de sculpture.

De préférence, les blocs de sculpture ont une base de quadrilatère et forment entre eux des rangées inclinées par rapport à la direction transversale.

Selon une première variante, les blocs de sculpture au sein de chaque rangée sont disposés de façon à ce que leurs faces d'attaque soient alignées entre elles.

Selon une deuxième variante, les blocs de sculpture au sein de chaque rangée sont disposés de façon à ce que les faces d'attaque de blocs adjacents soient décalées l'une par rapport à l'autre dans la direction circonférentielle.

Dans cette deuxième variante, les blocs de sculpture au sein de chaque rangée sont de préférence disposés de façon à ce que, en partant du bloc le plus central de la bande de roulement, les arêtes avant des blocs successivement adjacents soient décalées angulairement dans la direction circonférentielle et dans le sens inverse du sens de roulage d'un décalage angulaire **δ** compris entre 45% et 65% du pas angulaire **β** de la sculpture.

De préférence, les blocs de sculpture comportent en outre des incisions transversales.

L'invention concerne également un pneumatique et une roue non pneumatique comprenant une telle bande de roulement.

D'autres caractéristiques et avantages de l'invention ressortent de la description faite ci-après en référence au dessin annexé qui montre, à titre d'exemple non limitatif, une forme de réalisation de l'objet de l'invention.

### BREVE DESCRIPTION DES FIGURES

La figure **1** est une vue en perspective montrant un pneu comprenant une bande de roulement selon un premier mode de réalisation de l'invention;
La figure **2** est une vue de face du pneu de la figure **1****;**
La figure **3** est une vue en coupe selon **A-A** de la bande de roulement du pneu de la figure **2****;**
La figure **4** est une vue en perspective montrant un pneu comprenant une bande de roulement selon un deuxième mode de réalisation de l'invention;
La figure **5** est une vue de face du pneu de la figure **4****;**
La figure **6** est une vue en coupe selon **B-B** de la bande de roulement du pneu de la figure **5****;**
La figure **7** est une vue partielle en perspective montrant un détail d'une bande de roulement selon un troisième mode de réalisation de l'invention;
Les figures **8-a** à **8-c** sont des vues schématiques de détail du profil d'un bloc de sculpture de la bande de roulement de l'invention.
Les figures **9** à 11 sont des vues schématiques d'autres exemples de profils d'un bloc de sculpture de la bande de roulement de l'invention.
Les figures **12** et **13** sont des vues schématiques d'autres exemples de profils d'un bloc de sculpture de la bande de roulement de l'invention.

### DESCRIPTION DES FIGURES

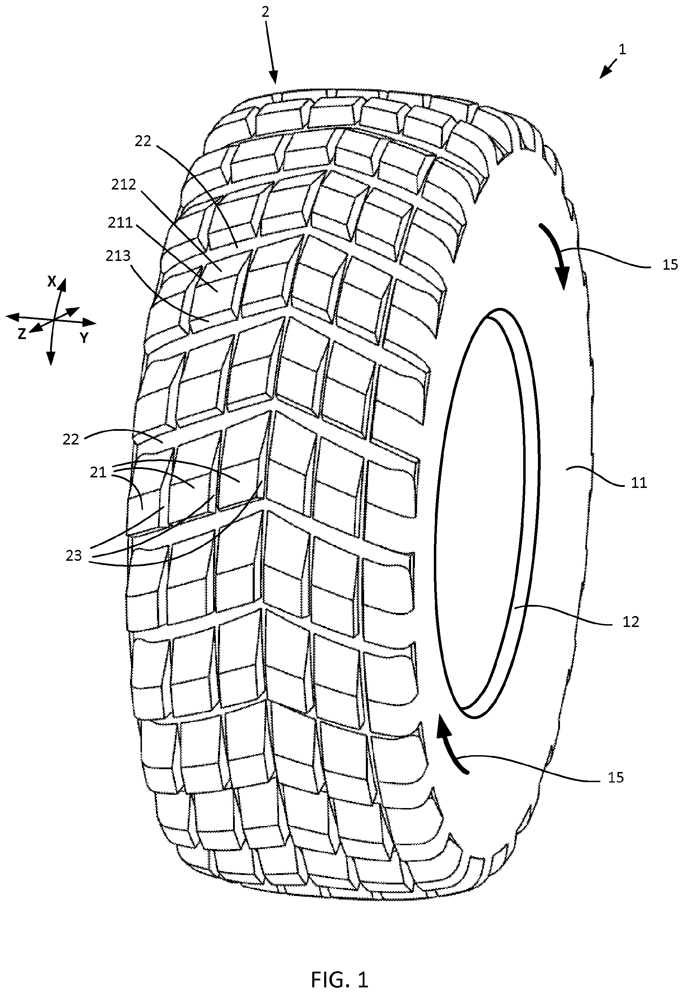

À la figure **1****,** on a représenté un pneu **1** comprenant une bande de roulement **2** selon l'invention. Ce pneu est destiné à équiper un essieu moteur d'un engin agricole. Ce pneu comprend en outre des flancs **11** et des bourrelets **12** de manière connu en soi. La bande de roulement **2** comprend des blocs de sculpture **21** s'étendant radialement vers l'extérieur à partir d'une surface portante **22.** Les blocs sont séparés entre eux axialement par des découpures **23** d'orientation sensiblement circonférentielle. Le sens de roulement préférentiel du pneu est indiqué par des flèches **15** moulées sur les flancs du pneu et/ou sur l'épaule de la bande de roulement.

La bande de roulement comporte au total un nombre « **N** » de blocs séparés entre eux. Chaque bloc comporte en particulier une face de contact **211,** une face d'attaque **212** et une face de fuite **213.** La face de contact est la face au sommet du bloc qui est destinée à rouler et porter la charge sur un sol rigide. Sur un sol meuble, les blocs peuvent s'enfoncer dans le sol. Dans le sens de roulement préférentiel du pneu, la face d'attaque **212** est alors celle qui entre la première dans l'aire de contact et peut transmettre un effort moteur alors que la face de fuite est celle qui sort la dernière de l'aire de contact. La face de fuite **213** ne peut transmettre d'effort au sol que lors d'une phase de freinage ou de marche arrière.

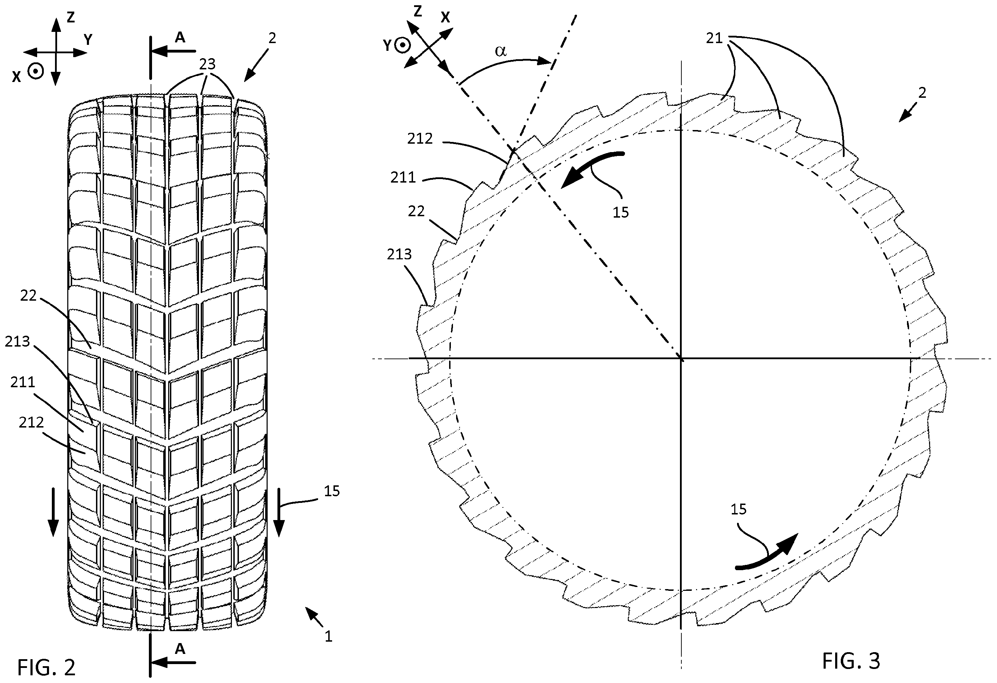

La figure **3** est une représentation de la section **A-A** issue de la vue de face du pneu représenté à la figure **2****.** Cette section permet de clairement visualiser l'orientation des faces d'attaque des blocs. Les faces d'attaque sont inclinées vers l'arrière par rapport à la direction radiale selon le sens de roulement préférentiel indiqué par les flèches **15** et forment un angle **α** avec cette direction radiale **Z.** Selon l'invention l'angle **α** est compris entre 50° et 75°. Sur cet exemple, l'angle **α** est de 60°.

Dans ce mode de réalisation, l'ensemble des blocs de la bande de roulement ont des faces d'attaque inclinées selon un angle **α** entre 50° et 75°, c'est-à-dire que le nombre **n** des blocs qui respectent cette caractéristique d'inclinaison de leur face d'attaque est égal à **N.** Cependant, l'invention peut également être mise en œuvre lorsqu'une partie seulement des blocs de la sculpture de la bande de roulement respectent cette caractéristique d'inclinaison. Par exemple, lorsque le nombre **n** de ces blocs est au moins égal à 0,2x**N**, c'est à dire qu'au moins 20% des blocs respectent cette caractéristique d'inclinaison de leur face d'attaque, le bénéfice en termes de traction sur sol meuble est déjà sensible.

Dans ce mode de réalisation, les blocs sont disposés sur la largeur de la bande de roulement selon un motif à six blocs. De part et d'autre d'un plan médian équatorial du pneu, les blocs sont disposés par trois et forment entre eux des rangées inclinées en chevrons par rapport à la direction transversale de manière connue en soi dans le domaine des bandes de roulement pour pneus agricoles. Les blocs de sculpture ont sensiblement comme base un quadrilatère. Au sein de chaque rangée, les blocs sont disposés de sorte que leurs faces d'attaque sont alignées entre elles, c'est à dire qu'elles forment ensemble une quasi-continuité seulement interrompue par les découpures **23.** La bande de roulement représentée ici est parfaitement symétrique par rapport au plan équatorial médian du pneu. Dans une variante non représentée, les motifs des deux moitiés de la bande de roulement situées de part et d'autre du plan équatorial médian peuvent au contraire être décalés l'une par rapport à l'autre selon la direction circonférentielle comme c'est souvent le cas pour les sculptures à barrettes des pneus agricoles de l'état de la technique.

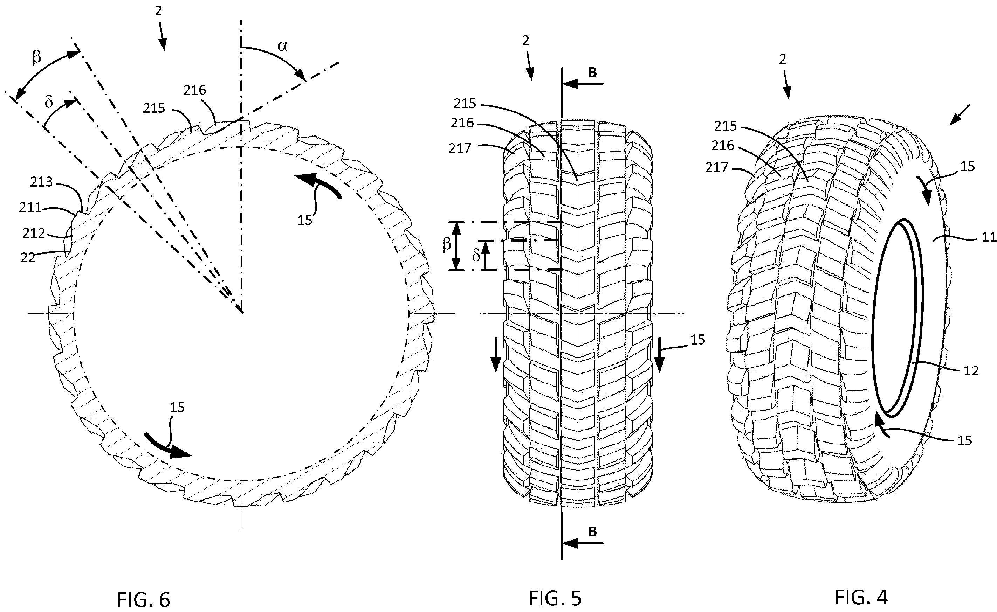

Les figures 4 à **6** représentent un deuxième mode de réalisation d'une bande de roulement selon l'invention. Les blocs sont disposés sur la largeur de la bande de roulement selon un motif à cinq blocs. Les blocs centraux **215** présentent une double face d'attaque, chaque partie de cette double face d'attaque respectant la caractéristique d'inclinaison exposée plus haut. Les autres blocs sont similaires à ceux du mode de réalisation précédent et respectent également l'inclinaison décrite avec un angle **α** proche de 60°.

Dans ce deuxième mode de réalisation, la disposition des blocs diffère de celle du premier mode de réalisation principalement en ce que les blocs ne sont plus alignés au sein de chaque rangée mais plutôt disposés de façon à ce que les faces d'attaque de blocs adjacents soient décalées l'une par rapport à l'autre dans la direction circonférentielle. Une manière de caractériser ce décalage est mieux visible sur la vue en coupe de la figure **6****.** Si l'on observe l'écart angulaire **β** entre deux motifs successifs (**β** est également appelé « pas angulaire » de la sculpture), le bloc intermédiaire **216** adjacent à un bloc central 215 et qui selon le sens de roulement du pneu entre dans l'aire de contact après ce bloc central est décalé angulairement d'un angle **δ** dans le sens opposé au sens de roulement (flèches **15).** De préférence ce décalage angulaire **δ** est compris entre 45% et 65% du pas angulaire **β**. Comme représenté sur la figure **6****,** l'angle **δ** entre deux blocs est mesuré entre l'arête avant du bloc le plus central (l'arête étant définie par l'intersection de la face d'attaque et de la face de contact) et l'arête avant du bloc adjacent qui selon le sens de roulement du pneu entre dans l'aire de contact après ledit bloc central. Le même principe de mesure s'applique pour chaque bloc successivement adjacent et pour les deux côtés de la bande de roulement. Un décalage similaire est donc également observé entre le bloc intermédiaire **216** et le bloc d'épaule **217.** La sculpture étant ici symétrique par rapport au plan équatorial médian du pneumatique, la même règle s'applique pour les deux côtés de la bande de roulement.

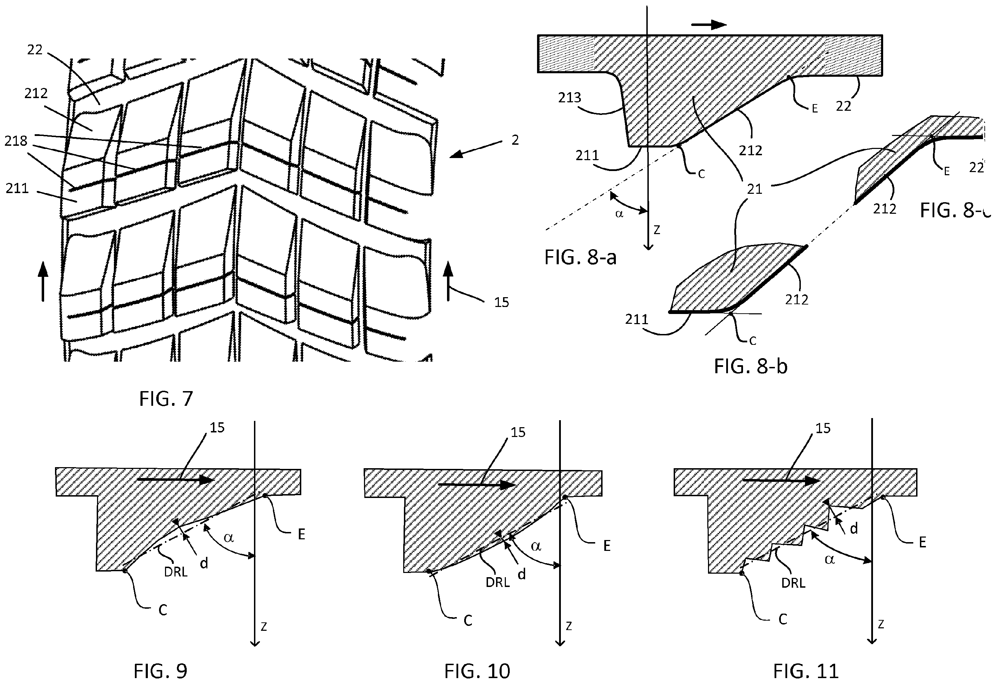

La figure **7** représente une variante du premier mode de réalisation des figures **1** à **3** dans laquelle les blocs comportent en outre des incisions transversales **218.** Des incisions similaires sont naturellement compatibles avec d'autres modes de réalisation de l'invention.

Les figures **8-a** à **8-c** montrent à plus grande échelle un exemple de profil de blocs dont la face d'attaque **212** est reliée à la face de contact **211** et à la surface portante **SP** par des congés de raccordement. Un point **C** est défini à l'intersection des prolongements de la face d'attaque et de la face de contact et un point **E** est défini à l'intersection des prolongements de la face d'attaque **212** et de la surface portante **22.** L'angle d'inclinaison **α** de la face d'attaque est alors l'angle que fait avec la direction radiale **Z** la droite passant par **C** et **E.**

Les figures **9, 10** et **11** montrent des exemples de cas où la face d'attaque **212** n'est pas plane. Dans ce cas on considèrera l'angle d'inclinaison **α** de la droite de régression linéaire **DRL** du profil de la face d'attaque entre les points **C** et **E** où la face d'attaque rejoint respectivement la face de contact **211** et la surface portante **22.** De préférence, la distance **d** séparant le profil de sa droite de régression linéaire **DRL** reste inférieure à 15 mm.

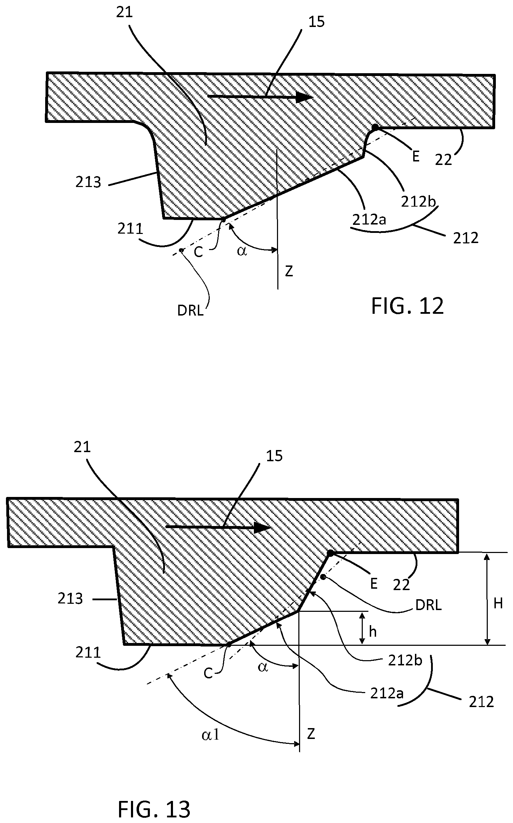

Les figures **12** et **13** montrent des cas où la face d'attaque **212** est principalement composée de deux surfaces, une première surface **212a** adjacente à la face de contact **211** et une deuxième surface **212b** adjacente à la surface portante **22.** Comme expliqué plus haut pour les figures **9** à **11****,** l'angle d'inclinaison **α** est celui de la droite de régression linéaire **DRL** du profil de la face d'attaque entre les points **C** et **E** où respectivement la première surface **212a** rejoint la face de contact **211** et la deuxième surface **212b** rejoint la surface portante **22.** L'angle **α** est compris entre 50° et 75° et de préférence entre 60° et 70°. La première surface **212a** forme quant à elle un angle **α1** avec la direction radiale **Z.** Cet angle **α1** est supérieur à **α** et tout en restant également compris entre 50° et 75°. La hauteur radiale **h** de la première surface **212a** représente au minimum un tiers de la hauteur du bloc de sculpture **H.**

Des tests comparatifs ont montré que les bandes de roulement des figures **1** et **4** apportent par rapport à une bande de roulement conventionnelle une augmentation très sensible de la performance de traction sur sol meuble. On a pu mesurer des gains entre 10% et 70% selon les conditions des tests et en particulier selon le taux de glissement considéré.

L'invention ne saurait être limitée à ces seuls exemples de réalisation décrits et diverses modifications peuvent y être apportées tout en restant dans le cadre tel que défini par les revendications.

## Revendications

1. **-** Bande de roulement (2) pour un essieu moteur d'un engin agricole, ladite bande de roulement comprenant des éléments de sculpture (21) s'étendant radialement vers l'extérieur à partir d'une surface portante (22), lesdits éléments de sculpture comprenant un nombre total **N** de blocs de sculpture (21) séparés entre eux axialement, lesdits blocs de sculpture comprenant une face de contact (211), une face d'attaque (212) et une face de fuite (213), ladite face d'attaque étant inclinée d'un angle **α** vers l'arrière par rapport à la direction radiale selon le sens de roulement (15) de la bande de roulement, ladite bande de roulement comprenant un nombre **n** de blocs de sculpture pour lesquels l'angle **α** est compris entre 50 degrés et 75 degrés, le nombre **n** étant au moins égal à 0,2 x **N.**

2. - Bande de roulement selon la revendication **1** dans laquelle l'angle **α** est compris entre 60 degrés et 70 degrés.

3. - Bande de roulement selon l'une des revendications **1** ou **2** dans laquelle le nombre **n** est au moins égal à 0,4 x **N.**

4. - Bande de roulement selon l'une des revendications précédentes dans laquelle la face d'attaque (212) est principalement composée de deux surfaces, une première surface (212a) étant adjacente à la face de contact (211) et une deuxième surface (212b) étant adjacente à la surface portante (22), l'angle d'inclinaison **α** étant celui de la droite de régression linéaire (DRL) du profil de la face d'attaque, la première surface (212a) formant un angle **α1** avec la direction radiale Z, **α1** étant supérieur à **α** et compris entre 50 degrés et 75 degrés, une hauteur radiale **h** de la première surface (212a) étant au moins égale à un tiers de la hauteur **H** du bloc de sculpture.

5. - Bande de roulement selon l'une des revendications précédentes dans laquelle les blocs de sculpture ont une base de quadrilatère et forment entre eux des rangées inclinées par rapport à la direction transversale Y.

6. - Bande de roulement selon la revendication **5** dans laquelle les blocs de sculpture au sein de chaque rangée sont disposés de façon à ce que leurs faces d'attaque (212) soient alignées entre elles.

7. - Bande de roulement selon la revendication **5** dans laquelle les blocs de sculpture au sein de chaque rangée sont disposés de façon à ce que les faces d'attaque de blocs adjacents (215, 216, 217) soient décalées l'une par rapport à l'autre dans la direction circonférentielle X.

8. - Bande de roulement selon la revendication **7** dans laquelle les blocs de sculpture au sein de chaque rangée sont disposés de façon à ce que, en partant du bloc le plus central de la bande de roulement, les arêtes avant des blocs successivement adjacents (215, 216, 217) soient décalées angulairement dans la direction circonférentielle et dans le sens inverse du sens de roulage d'un décalage angulaire **δ** compris entre 45% et 65% du pas angulaire **β** de la sculpture.

9. - Bande de roulement selon l'une des revendications précédentes dans laquelle les blocs de sculpture comportent en outre des incisions transversales (218).

10. - Pneumatique (1) comprenant une bande de roulement selon l'une des revendications précédentes.

11. **-** Roue non pneumatique comprenant une bande de roulement selon l'une des revendications **1** à **9.**

## Patentansprüche

1. Laufstreifen (2) für eine Antriebsachse einer landwirtschaftlichen Maschine, wobei der Laufstreifen Profilelemente (21) beinhaltet, die sich von einer Trägeroberfläche (22) radial nach außen erstrecken, wobei die Profilelemente eine Gesamtanzahl N von Profilblöcken (21) beinhalten, die axial voneinander beabstandet sind, wobei die Profilblöcke eine Kontaktfläche (211), eine Vorderfläche (212) und eine Hinterfläche (213) beinhalten, wobei die Vorderfläche entlang der Rollrichtung (15) des Laufstreifens in Bezug auf die radiale Richtung um einen Winkel α nach hinten geneigt ist, wobei der Laufstreifen eine Anzahl n von Profilblöcken beinhaltet, für die der Winkel α zwischen 50 Grad und 75 Grad beträgt, wobei die Anzahl n mindestens gleich 0,2 x N ist.

2. Laufstreifen nach Anspruch 1, wobei der Winkel α zwischen 60 Grad und 70 Grad beträgt.

3. Laufstreifen nach einem der Ansprüche 1 oder 2, wobei die Anzahl n mindestens gleich 0,4 x N ist.

4. Laufstreifen nach einem der vorhergehenden Ansprüche, wobei die Vorderfläche (212) im Wesentlichen aus zwei Oberflächen besteht, wobei eine erste Oberfläche (212a) an die Kontaktfläche (211) angrenzt und eine zweite Oberfläche (212b) an die Trägeroberfläche (22) angrenzt, wobei der Neigungswinkel α derjenige der linearen Regressionsgeraden (DRL) des Profils der Vorderfläche ist, wobei die erste Oberfläche (212a) mit der radialen Richtung Z einen Winkel α1 bildet, wobei α1 größer als α ist und zwischen 50 Grad und 75 Grad beträgt, wobei eine radiale Höhe h der ersten Oberfläche (212a) mindestens ein Drittel der Höhe H des Profilblocks beträgt.

5. Laufstreifen nach einem der vorhergehenden Ansprüche, wobei die Profilblöcke eine viereckige Basis aufweisen und untereinander Reihen bilden, die in Bezug auf die Querrichtung Y geneigt sind.

6. Laufstreifen nach Anspruch 5, wobei die Profilblöcke innerhalb jeder Reihe so angeordnet sind, dass ihre Vorderflächen (212) untereinander fluchten.

7. Laufstreifen nach Anspruch 5, wobei die Profilblöcke innerhalb jeder Reihe so angeordnet sind, dass die Vorderflächen von benachbarten Blöcken (215, 216, 217) in der Umfangsrichtung X zueinander versetzt sind.

8. Laufstreifen nach Anspruch 7, wobei die Profilblöcke innerhalb jeder Reihe so angeordnet sind, dass, ausgehend von dem mittigsten Block des Laufstreifens, die Vorderkanten der aufeinanderfolgenden benachbarten Blöcke (215, 216, 217) in der Umfangsrichtung und in der zu der Rollrichtung umgekehrten Richtung um einen Winkelversatz δ winklig versetzt sind, der zwischen 45 % und 65 % der Winkelteilung β des Profils beträgt.

9. Laufstreifen nach einem der vorhergehenden Ansprüche, wobei die Profilblöcke ferner quer verlaufende Einschnitte (218) umfassen.

10. Reifen (1), der einen Laufstreifen nach einem der vorhergehenden Ansprüche beinhaltet.

11. Luftloses Rad, das einen Laufstreifen nach einem der Ansprüche 1 bis 9 beinhaltet.

## Claims

1. **-** Tread (2) for a driven axle of an agricultural vehicle, said tread comprising tread pattern elements (21) extending radially towards the outside from a bearing surface (22), said tread pattern elements comprising a total number **N** of tread pattern blocks (21) that are separated axially from one another, said tread pattern blocks comprising a contact face (211), a leading face (212) and a trailing face (213), said leading face being inclined at an angle **α** towards the rear with respect to the radial direction in the rolling direction (15) of the tread, said tread comprising a number **n** of tread pattern blocks in the case of which the angle **α** is between 50 degrees and 75 degrees, the number **n** being at least equal to 0.2 x **N.**

2. - Tread according to Claim **1,** wherein the angle **α** is between 60 degrees and 70 degrees.

3. - Tread according to either of Claims **1** and **2,** wherein the number **n** is at least equal to 0.4 x **N.**

4. - Tread according to one of the preceding claims, wherein the leading face (212) is made up mainly of two surfaces, a first surface (212a) being adjacent to the contact face (211) and a second surface (212b) being adjacent to the bearing surface (22), the inclination angle **α** being that of the linear regression line (DRL) of the profile of the leading face, the first surface (212a) forming an angle **α1** with the radial direction Z, **α1** being greater than **α** and between 50 degrees and 75 degrees, a radial height **h** of the first surface (212a) being at least equal to one third of the height **H** of the tread pattern block.

5. - Tread according to one of the preceding claims, wherein the tread pattern blocks have a quadrilateral base and form, between one another, rows that are inclined with respect to the transverse direction Y.

6. - Tread according to Claim **5,** wherein the tread pattern blocks within each row are disposed such that their leading faces (212) are aligned with one another.

7. - Tread according to Claim **5,** wherein the tread pattern blocks within each row are disposed such that the leading faces of adjacent blocks (215, 216, 217) are offset with respect to one another in the circumferential direction X.

8. - Tread according to Claim **7,** wherein the tread pattern blocks within each row are disposed such that, starting from the most central block of the tread, the front edge corners of the successively adjacent blocks (215, 216, 217) are angularly offset in the circumferential direction and in the opposite direction to the rolling direction by an angular offset **δ** of between 45% and 65% of the angular spacing **β** of the tread pattern.

9. - Tread according to one of the preceding claims, wherein the tread pattern blocks also have transverse sipes (218).

10. - Tyre (1) comprising a tread according to one of the preceding claims.

11. - Non-pneumatic wheel comprising a tread according to one of Claims **1** to **9.**
